(19) **Europäisches Patentamt**
**European Patent Office**
**Office européen des brevets**

(11) **EP 3 163 904 A1**

(12) **EUROPEAN PATENT APPLICATION**

(43) Date of publication:
03.05.2017 Bulletin 2017/18

(51) Int Cl.:
*H04R 3/00* (2006.01)          *H04R 1/32* (2006.01)

(21) Application number: 16175978.2

(22) Date of filing: 23.06.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 29.10.2015 CN 201510719339

(71) Applicant: **Xiaomi Inc.**
**Beijing 100085 (CN)**

(72) Inventors:
• **Shi, Runyu**
**Haidian District**
**Bejing (CN)**
• **Xiong, Dawei**
**Haidian District**
**Bejing (CN)**
• **Li, Weishan**
**Haidian District**
**Bejing (CN)**

(74) Representative: **Hughes, Andrea Michelle**
**Dehns Germany LLP**
**Singlspielerhaus**
**Sendlinger Straße 29**
**80331 München (DE)**

(54) **SOUND RECORDING METHOD AND DEVICE FOR GENERATING 5.1 SURROUND SOUND CHANNELS FROM THREE MICROPHONE CHANNELS**

(57) The present disclosure provides a sound recording method and device, which belongs to field of multimedia processing. The method is applied in a mobile terminal equipped with three microphones, including: acquiring (202, 310) three channels of sound signals collected by the three microphones; calculating (204) a central channel signal, a left channel signal, a right channel signal, a rear left channel signal and a rear right channel signal in a 5.1 sound channel according to the three channels of sound signals; calculating (206) a bass channel signal in the 5.1 sound channel according to the three channels of sound signals; and combining (208, 350) the above signals to obtain a sound signal of the 5.1 sound channel.

Fig.2

## Description

## TECHNICAL FIELD

The present disclosure generally relates to the field of multimedia processing, and more particularly, to a sound recording method and device.

## BACKGROUND

Mobile terminals, such as smart phones, tablet computers or palm computers, are equipped with microphones, and users may record sound via the microphones.

In general, the mobile terminal is only provided with 1-3 microphones, thereby the recorded audio data is single-channel data or dual-channel data; in this case, sound field range and sense of immediacy of the recorded audio data are poor.

## SUMMARY

In order to solve the problem that only audio data of single channel or dual channel can be recorded due to hardware restriction and thereby sound field range and sense of immediacy are poor, the present disclosure provides a sound recording method and device. The technical solutions are as follows.

According to a first aspect of embodiments of the present disclosure, there is provided a sound recording method applied in a mobile terminal provided with three microphones, including:

acquiring three channels of sound signals collected by the three microphones;
calculating a central channel signal, a left channel signal, a right channel signal, a rear left channel signal and a rear right channel signal in a 5.1 sound channel according to the three channels of sound signals;
calculating a bass channel signal in the 5.1 sound channel according to the three channels of sound signals; and
combining the central channel signal, the left channel signal, the right channel signal, the rear left channel signal, the rear right channel signal, and the bass channel signal to obtain a sound signal of the 5.1 sound channel.

Advantageously, the three microphones include a first microphone located in a central channel direction of the 5.1 sound channel, a second microphone located in a rear left channel direction of the 5.1 sound channel, and a third microphone located in a rear right channel direction of the 5. 1 sound channel; in this case, the calculating the central channel signal, the left channel signal, the right channel signal, the rear left channel signal and the rear right channel signal in the 5.1 sound channel according to the three channels of sound signals includes:

using a first sound signal collected by the first microphone as the central channel signal;
using a second sound signal collected by the second microphone as the rear left channel signal;
using a third sound signal collected by the third microphone as the rear right channel signal;
performing a weighted average on amplitudes of the first sound signal and the second sound signal at the same moment to obtain a fourth sound signal and using the fourth sound signal as the left channel signal; and
performing a weighted average on amplitudes of the first sound signal and the third sound signal at the same moment to obtain a fifth sound signal and using the fifth sound signal as the right channel signal.

Advantageously, the three microphones are dispersedly disposed with respect to an origin point, and each sound channel in the 5.1 sound channel has two nearest microphones among the three microphones; in this case, the calculating the central channel signal, the left channel signal, the right channel signal, the rear left channel signal and the rear right channel signal in the 5.1 sound channel according to the three channels of sound signals includes:

for any sound channel in the 5.1 sound channel, acquiring two channels of sound signals collected by two microphones nearest to this sound channel; and separating out a sound signal corresponding to this sound channel from the two channels of sound signals according to a phase difference of arrival corresponding to this sound channel,

wherein the phase difference of arrival is a difference between initial phase angles of sound from this sound channel when arriving at the two microphones respectively, and the sound signal corresponding to the sound channel is any one of the central channel signal, the left channel signal, the right channel signal, the rear left channel signal and the rear right channel signal.

Advantageously, the separating out the sound signal corresponding to this sound channel from the two channels of sound signals according to the phase difference of arrival corresponding to this sound channel includes:

filtering a first channel of sound signal in the two channels of sound signals according to the phase difference of arrival corresponding to the sound channel to obtain first filtering data, filtering a second channel of sound signal in the two channels of sound signals according to the phase difference of arrival corresponding to the sound channel to obtain second filtering data; and

exacting a same portion in the first filtering data and the second filtering data as the sound signal corresponding to the sound channel.

Advantageously, the calculating the bass channel signal in the 5.1 sound channel according to the three channels of sound signals includes:

averaging amplitudes of the three channels of sound signals at the same moment to obtain an average sound signal; and
performing a low-pass filtering on the average sound signal to obtain the bass channel signal.

Advantageously, the method may further include:

performing a noise-reduction processing to the three channels of sound signals.

According to a second aspect of embodiments of the present disclosure, there is provided a sound recording device provided with three microphones, including:

an acquiring module configured to acquire three channels of sound signals collected by the three microphones;
a first calculating module configured to calculate a central channel signal, a left channel signal, a right channel signal, a rear left channel signal and a rear right channel signal in a 5.1 sound channel according to the three channels of sound signals;
a second calculating module configured to calculate a bass channel signal in the 5.1 sound channel according to the three channels of sound signals; and
a combining module configured to combine the central channel signal, the left channel signal, the right channel signal, the rear left channel signal, the rear right channel signal, and the bass channel signal to obtain a sound signal of the 5.1 sound channel.

The three microphones may include a first microphone located in a central channel direction of the 5.1 sound channel, a second microphone located in a rear left channel direction of the 5.1 sound channel, and a third microphone located in a rear right channel direction of the 5. 1 sound channel; the first calculating module may include:

a first submodule configured to use a first sound signal collected by the first microphone as the central channel signal;
a second submodule configured to use a second sound signal collected by the second microphone as the rear left channel signal;
a third submodule configured to use a third sound signal collected by the third microphone as the rear right channel signal;
a first average submodule configured to perform a weighted average on amplitudes of the first sound signal and the second sound signal at the same moment to obtain a fourth sound signal and use the fourth sound signal as the left channel signal; and
a second average submodule configured to perform a weighted average on amplitudes of the first sound signal and the third sound signal at the same moment to obtain a fifth sound signal and using the fifth sound signal as the right channel signal.

Alternatively, the three microphones are dispersedly disposed with respect to an origin point, and each sound channel in the 5.1 sound channel has two nearest microphones among the three microphones; and the first calculating module includes:

an acquiring submodule configured to, for any sound channel in the 5.1 sound channel, acquire two channels of sound signals collected by two microphones nearest to this sound channel; and
a separating submodule configured to separate out a sound signal corresponding to this sound channel from the two channels of sound signals according to a phase difference of arrival corresponding to this sound channel,

wherein the phase difference of arrival is a difference between initial phase angles of sound from this sound channel when arriving at the two microphones respectively, and the sound signal corresponding to the sound channel is any one of the central channel signal, the left channel signal, the right channel signal, the rear left channel signal and the rear right channel signal.

The separating submodule may include:

a filtering submodule configured to filter a first channel of sound signal in the two channels of sound signals according to the phase difference of arrival corresponding to the sound channel to obtain first filtering data, and filter a second channel of sound signal in the two channels of sound signals according to the phase difference of arrival corresponding to the sound channel to obtain second filtering data; and
an exacting submodule configured to exact a same portion in the first filtering data and the second filtering data as the sound signal corresponding to the sound channel.

The second calculating module may include:

an averaging submodule configured to average amplitudes of the three channels of sound signals at the same moment to obtain an average sound signal; and
a low-pass filtering submodule configured to perform a low-pass filtering on the average sound signal to obtain the bass channel signal.

The device may further include:

a noise-reduction module configured to perform a noise-reduction processing to the three channels of sound signals.

According to a third aspect of embodiments of the present disclosure, there is provided a sound recording device provided with three microphones, including:

a processor; and
a memory for storing instructions executable by the processor;

wherein the processor is configured to:

acquire three channels of sound signals collected by the three microphones;
calculate a central channel signal, a left channel signal, a right channel signal, a rear left channel signal and a rear right channel signal in a 5.1 sound channel according to the three channels of sound signals;
calculate a bass channel signal in the 5.1 sound channel according to the three channels of sound signals; and
combine the central channel signal, the left channel signal, the right channel signal, the rear left channel signal, the rear right channel signal, and the bass channel signal to obtain a sound signal of the 5.1 sound channel.

The present invention also provides a computer program, which when executing on a processor of a mobile terminal, performs the above method.
The technical solutions provided by embodiments of the present disclosure may have the following beneficial effects:

three channels of sound signals are collected by three microphones in a terminal, the central channel signal, the left channel signal, the right channel signal, the rear left channel signal, the rear right channel signal, and the bass channel signal are established and calculated according to the three channels of sound signals, and the six channel signals are combined into the sound signal of the 5. 1 sound channel, which solves the problems in the related art that the audio data recorded by the user can only be single-channel data or dual-channel data and thereby sound field range and sense of immediacy of the recorded audio data are poor, and achieves the effects that the user may record 5.1 sound channel data without changing the hardware configuration of the terminal and thereby the tone quality of the recorded file is improved

It is to be understood that both the foregoing general description and the following detailed description are exemplary and explanatory only and are not restrictive of the invention, as claimed.

**BRIEF DESCRIPTION OF THE DRAWINGS**

The accompanying drawings, which are incorporated in and constitute a part of this specification, illustrate embodiments consistent with the invention and, together with the description, serve to explain the principles of the invention.

Fig. 1A is a schematic diagram of a sound channel distribution in a 5.1 sound channel system used in embodiments of the present disclosure.
Fig. 1B is a schematic diagram of an implementation of an exemplary embodiment of the present disclosure.
Fig. 1C is a schematic diagram of an implementation circumstance involved by another exemplary embodiment of the present disclosure.
Fig. 1D is a schematic diagram of an implementation of a further exemplary embodiment of the present disclosure.
Fig. 2 is a flow chart of a method for recording sound, according to an exemplary embodiment.
Fig. 3 is a flow chart of a method for recording sound, according to another exemplary embodiment.
Fig. 4 is a flow chart of a method for recording sound, according to further another exemplary embodiment.
Fig. 5 is a block diagram of a device for recording sound, according to an exemplary embodiment.
Fig. 6 is a block diagram of a device for recording sound, according to another exemplary embodiment.
Fig. 7 is a block diagram of a device for recording sound, according to further another exemplary embodiment.
Fig. 8 is a block diagram of a device, according to an exemplary embodiment.

**DETAILED DESCRIPTION**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

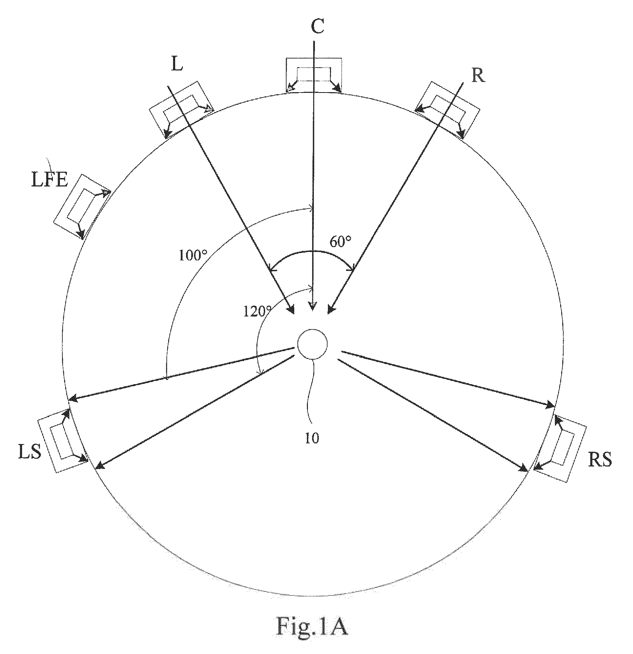

Fig. 1A is a schematic diagram of a sound channel distribution in a 5.1 sound channel system used in embodiments of the present disclosure. As shown in Fig. 1A, the 5.1 sound channel system may include a central sound channel C, a left sound channel L, a right sound channel R, a rear left sound channel LS, a rear right sound channel RS, and a bass sound channel LFE.

Assuming that a user is located at a center point 10 and towards a position of the central sound channel C in Fig. 1A, distances between each sound channel and the center point at which the user is located are the same, and each sound channel and the center point at which the user is located are in a same plane.

The center sound channel C is located at a direct front of a facing direction of the user.

The left sound channel L and the right sound channel R are respectively located at two sides of the center sound channel C, respectively have a 30 degree angle with respect to the facing direction of the user, and are disposed symmetrically.

The rear left sound channel LS and the rear right sound channel RS are respectively located at the rear of two sides of the facing direction of the user, respectively have a 100-120 degree angle with respect to the facing direction of the user, and are disposed symmetrically.

Since direction of sense of bass is relatively weak, there is no strict requirement on a placing position of the bass sound channel LFE. The difference of angle of the bass sound channel LFE with respect to the facing direction of the user results in variation of low pitch in the sound signals of the 5.1 sound channel, and the user may adjust the placing position of the bass sound channel LFE according to needs. The present disclosure does not limit the angle between the bass sound channel LFE and the facing direction of the user, and Fig. 1A only illustratively identifies it.

It should be noted that the angle between each sound channel in the 5.1 sound channel system of the embodiments of the present disclosure and the facing direction of the user is illustrative. In addition, the distance between each sound channel and the user may be different, a height of each sound channel may also be different, i.e., the sound channels may not be placed in one plane, the user may adjust the sound channels voluntarily, and difference of placing position of each sound channel may result in difference of the sound signal, which is not limited by the present disclosure.

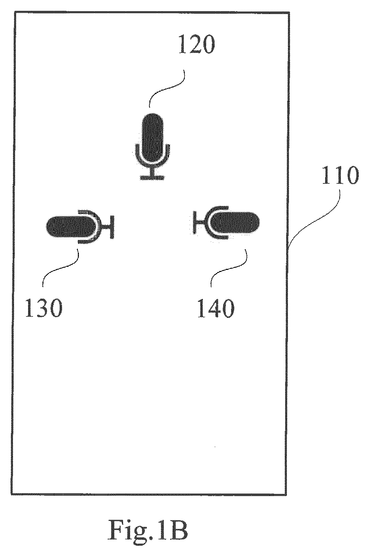

Fig. 1B is a schematic diagram of a terminal in an exemplary embodiment of the present disclosure. As shown in Fig. 1B, the terminal 110 may include: a first microphone 120, a second microphone 130, and a third microphone 140.

The terminal 110 may be a mobile terminal provided with three microphones, such as a mobile phone, and a tablet computer.

The first microphone 120, the second microphone 130, and the third microphone 140 are the three microphones provided in the terminal 110 and are configured to collect sound signals.

Advantageously, there are the following two ways of setting the first microphone 120, the second microphone 130, and the third microphone 140.

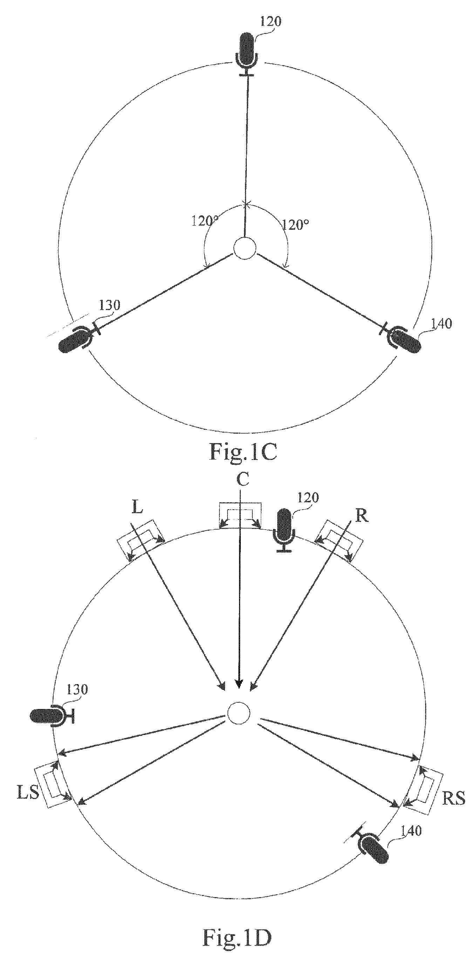

One way of setting the three microphones is shown in Fig. 1C, wherein the first microphone 120 faces forward, the second microphone 130 faces left and has a 100-120 degree angle with the first microphone 120, and the third microphone 140 faces right and has a 100-120 angle with the first microphone 120. That is, the placing position of the first microphone 120 is corresponding to a direction of the central sound channel in the 5.1 sound channel, the placing position of the second microphone 130 is corresponding to a direction of the rear left sound channel, and the placing position of the third microphone 140 is corresponding to a direction of the rear right sound channel.

The other way of setting the three microphones is shown in Fig. 1D, wherein the three microphones are freely and dispersedly disposed, and then among the three microphones, there are two microphones nearest to each sound channel in the 5.1 sound channel system. Explanations are given by taking Fig. 1D as an example. The two microphones nearest to the center sound channel C are the first microphone 120 and the second microphone 130; the two microphones nearest to the left sound channel L are the first microphone 120 and the second microphone 130; the two microphones nearest to the right sound channel R are the first microphone 120 and the third microphone 140; the two microphones nearest to the rear left sound channel LS are the first microphone 120 and the third microphone 140; and the two microphones nearest to the rear right sound channel RS are the first microphone 120 and the third microphone 140. Certainly, the three microphones may be located at other positions, as long as they are dispersed as much as possible, which is not limited by the present disclosure.

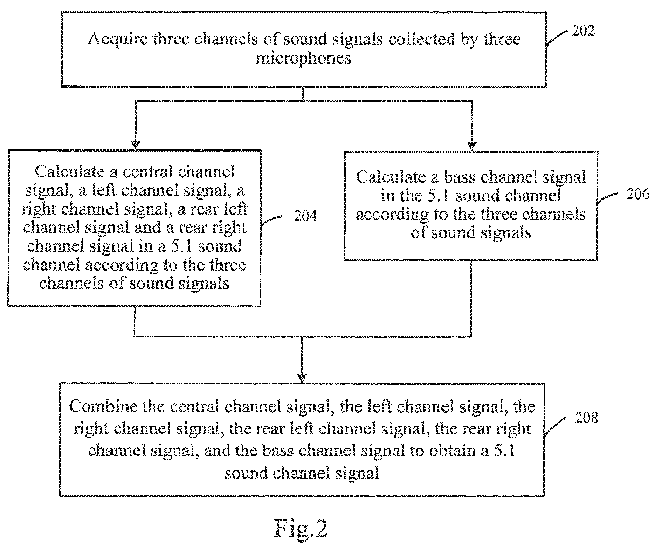

Fig. 2 is a flow chart of a method for recording sound, according to an exemplary embodiment. As shown in Fig. 2, the sound recording method is applied in an implementation environment shown in Fig. 1B and Fig. 1C, and involves the 5.1 sound channel system shown in Fig. 1A. The method includes the following steps.

In step 202, three channels of sound signals collected by the three microphones are acquired.

In general, the three sound signals collected by the three microphones are from a same sound source, and distances of the three microphones from the sound source are different. Since the moments at which the sound arrives at respective microphones are different, in the embodiments of the present disclosure, it may be deemed that the three channels of sound signals collected by the three microphones at the same moment have the same frequency and different amplitudes.

In step 204, a central channel signal, a left channel signal, a right channel signal, a rear left channel signal and a rear right channel signal in a 5.1 sound channel are calculated according to the three channels of sound signals.

In step 206, a bass channel signal in the 5.1 sound channel is calculated according to the three channels of sound signals.

It should be noted, step 204 and step 206 are coordinate, and there is no particular sequencing therebetween.

In step 208, the central channel signal, the left channel signal, the right channel signal, the rear left channel signal, the rear right channel signal, and the bass channel signal are combined to obtain a sound signal of the 5.1 sound channel.

In conclusion, in the sound recording method provided in the embodiment of the present disclosure, three channels of sound signals are collected by three microphones in a terminal, the central channel signal, the left channel signal, the right channel signal, the rear left channel signal, the rear right channel signal, and the bass channel signal are established and calculated according to the three channels of sound signals, and the six channel signals are combined into the sound signal of the 5. 1 sound channel, which solves the problems in the related art that the audio data recorded by the user can only be single-channel data or dual-channel data and thereby sound field range and sense of immediacy of the recorded audio data are poor, and achieves the effects that the user may record 5.1 sound channel data without changing the hardware configuration of the terminal and thereby recording quality and listening experience of the user are greatly improved.

Since there are two ways of setting the three microphones in the terminal 110, corresponding to each setting manner, the particular implementing manner of calculating the channel signal in the above step 204 is different.

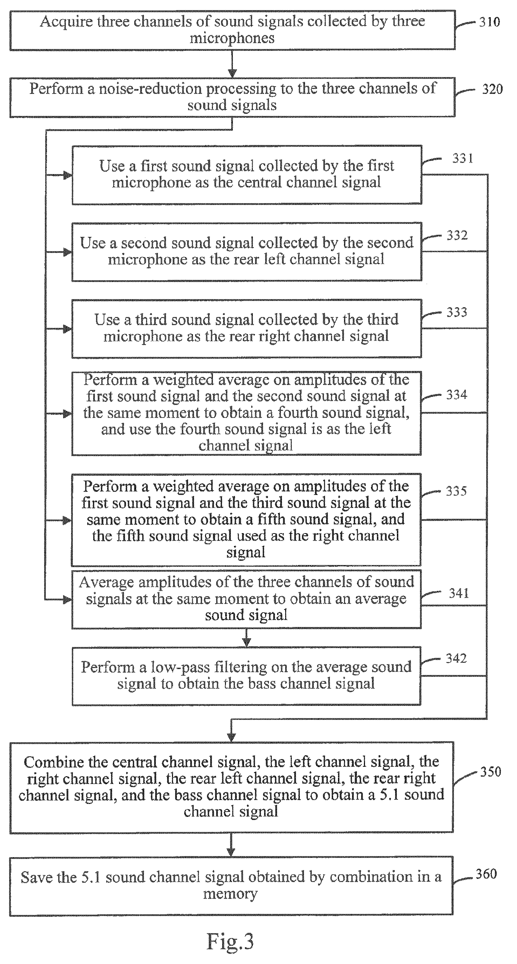

Corresponding to the first way of setting shown in Fig. 1B, i.e., three microphones correspond to the 5.1 sound channel system, the specific implementing manner is shown as the flow chart in Fig. 3, and the above step 204 may be alternatively implemented to include steps 331-335 in Fig. 3.

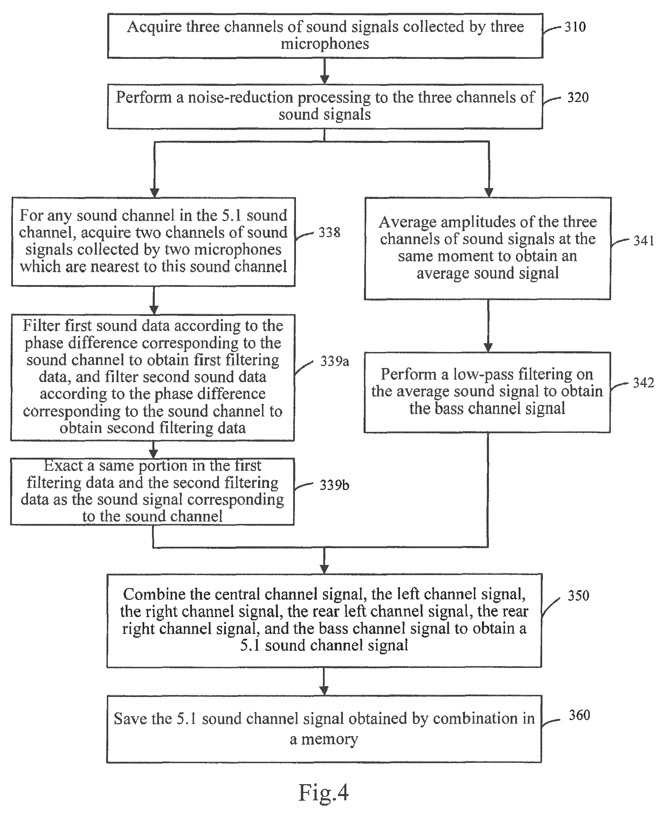

Corresponding to the second way of setting shown in Fig. 1D, i.e., three microphones are freely disposed, the specific implementing manner is shown as the flow chart in Fig. 4, and the above step 204 may be alternatively implemented to include steps 338, 339a and 339b in Fig. 4.

Fig. 3 is a flow chart of a method for recording sound, according to another exemplary embodiment. As shown in Fig. 3, illustrations are given by using an example in which the sound recording method is applied in the first setting manner shown in Fig. 1B, and the method includes the following steps.

In step 310, three channels of sound signals collected by the three microphones are acquired.

The terminal acquires three channels of sound signals respectively collected by the three microphones. In the present embodiment, the sound signals collected by the first, second and third microphones are respectively denoted by A_mic1, A_mic2 and A_mic3.

The sound signals acquired by the terminal are analog signals. After acquiring the sound signals, the terminal may convert the analog signals into digital signals for subsequent processing, or the collected analog signals may be processed directly, which is not limited by the present embodiment. In the present embodiment, illustrations are given by using an example in which the collected sound signals are converted into digital signals.

In step 320, a noise-reduction processing is performed to the three channels of sound signals.

The terminal performs a noise-reduction processing to the acquired three channels of sound signals, and the sound signals of the first, second and third microphones after the noise-reduction are respectively denoted by A_mic1', A_mic2' and A_mic3'.

One noise-reduction method is as follows: removing noise from the signal based on wavelet, performing a multi-layer wavelet signal decomposition to the collected first sound signal A_mic1, selecting a proper threshold to process a high frequency coefficient in each layer of the wavelet signal, and performing a wavelet reconstruction on the processed signals, wherein the outputted signal is A_mic1'. This method may also be adopted for the second and third signals to reduce noise, and the sound signals obtained by the noise-reduction are A_mic2' and A_mic3'.

The person skilled in the art may appreciate that the noise-reduction process in this step is not necessary, and is only for improving quality of the sound signal, i.e., this step is optional. In addition, there are many methods for reducing noise, and the noise in the three channels of sound signals may be filtered via various signal processing methods, which is not limited by the present embodiment.

In step 331, a first sound signal collected by the first microphone is used as the central channel signal.

The terminal uses A_mic1' obtained by denoising the first sound signal collected by the first microphone as the center channel signal, denoted by A_C', i.e., the central channel signal is A_C', A_C-A_mic1'.

In step 332, a second sound signal collected by the second microphone is used as the rear left channel signal.

The terminal uses A_mic2' obtained by denoising the second sound signal collected by the second microphone as the rear left channel signal, denoted by A_LS', i.e., the rear left channel signal is A_LS', A_LS' = A_mic2'.

In step 333, a third sound signal collected by the third microphone is used as the rear right channel signal.

The terminal uses A_mic3' obtained by denoising the third sound signal collected by the third microphone as the rear right channel signal, denoted by A_RS', i.e., the rear right channel signal is A_RS', A_RS' = A_mic3'.

In step 334, a weighted average is performed on amplitudes of the first sound signal and the second sound signal at the same moment to obtain a fourth sound signal, and the fourth sound signal is used as the left channel signal.

The terminal performs a weighted average on amplitudes of A_mic1' obtained by denoising the first sound signal and A_mic2' obtained by denoising the second sound signal at the same moment to obtain a fourth sound signal, and uses the fourth sound signal as the left channel signal, denoted by A_L', i.e., the left channel signal is A_L',

$$A\_L' = a1 * A\_mic1' + b1 * A\_mic2'$$

wherein a1 is a weight of A_mic1', b1 is a weight of A_mic2', specific values of a1 and b1 may be set in advance according to positions of the three microphones and position of each sound channel, or may be set by the user; one possible way of setting values is: a1=0.375, b1=0.625. It should be noted, in the above possible way of setting values, a1+b1=1, and in other possible ways of setting values, a1+b1 may not be 1, the setting manner of a1 and b1, and the specific values of a1 and b1 are not limited by the embodiments of the present disclosure.

In step 335, a weighted average is performed on amplitudes of the first sound signal and the third sound signal at the same moment to obtain a fifth sound signal, and the fifth sound signal is used as the right channel signal.

The terminal performs a weighted average on amplitudes of A_mic1' obtained by denoising the first sound signal and A_mic3' obtained by denoising the third sound signal at the same moment to obtain a fifth sound signal, and uses the fifth sound signal as the right channel signal, denoted by A_R', i.e., the right channel signal is A_R',

$$A\_R' = a2 * A\_mic1' + b2 * A\_mic3'$$

wherein a2 is a weight of A_mic1', b2 is a weight of A_mic3', specific values of a2 and b2 may be set in advance according to positions of the three microphones and position of each sound channel, or may be set by the user; one possible way of setting values is: a2=0.375, b2=0.625. It should be noted, in the above possible way of setting values, a2+b2=1, and in other possible ways of setting values, a2+b2 may not be 1, the setting manner of a2 and b2, and the specific values of a2 and b2 are not limited by the embodiments of the present disclosure.

It should be noted, the above steps 331-335 are coordinate, and there is no particular sequencing therebetween.

A bass channel signal in the 5.1 sound channel is calculated according to the three channels of sound signals. Alternatively, the implementing procedure of this step is as follows.

In step 341, amplitudes of the three channels of sound signals at the same moment are averaged to obtain an average sound signal.

The terminal averages amplitudes of A_mic1', A_mic2' and A_mic3' are obtained by denoising the three channels of sound signals at the same moment, so as to obtain an average sound signal, denoted by A_LFE, i.e., the average sound signal is A_LFE,

$$A\_LFE = (A\_mic1' + A\_mic2' + A\_mic3')/3$$

In step 342, a low-pass filtering is performed on the average sound signal to obtain the bass channel signal.

The terminal performs a low-pass filtering to the average sound signal obtained in the step 341 to obtain the bass channel signal. The cut-off frequency of the low-pass filter is optional, and generally, the cut-off frequency is set to be a value between 80Hz to 120Hz, which is not restricted by the present embodiment.

The bass channel signal obtained by the low-pass filtering is denoted by A_LFE', i.e., the bass channel signal is A_LFE', A_LFE'=LPASS(A_LFE), wherein function y=LPASS(x) indicates that y is a signal obtained by making a signal x passing through the low-pass filter.

It should be noted, the step 341 and the steps 331-335 are coordinate, and there is no particular sequencing therebetween.

In step 350, the central channel signal, the left channel signal, the right channel signal, the rear left channel signal, the rear right channel signal, and the bass channel signal are combined to obtain a sound signal of the 5.1 sound channel.

The terminal combines the central channel signal A_C', the left channel signal A_L', the right channel signal A_R', the rear left channel signal A_LS', the rear right channel signal A_RS', and the bass channel signal A_LFE' obtained by the above steps to obtain the 5.1 sound channel signal, denoted by A_5.1ch. The optional combination manners may be appreciated by the person skilled in the art, which will not be elaborated in the present embodiment.

In step 360, the 5.1 sound channel signal obtained by combination is saved in a memory. The terminal saves the 5.1 sound channel signal obtained by combination in a memory of the terminal per se, or in an exterior storage device.

When storing the 5.1 sound channel signal, the terminal may adopt formats such as an uncompressed PCM or WAV.

Alternatively, the terminal may also adopt a compression format supporting 5.1 sound channel, such as DolbyDigital, AAC (Advanced Audio Coding), DTS (Digital Theatre System), and 3D-Audio.

In conclusion, in the method provided in the present embodiment, three channels of sound signals are collected by three microphones in a terminal, the central channel signal, the left channel signal, the right channel signal, the rear left channel signal, the rear right channel signal, and the bass channel signal are established and calculated according to the three channels of sound signals, and the six channel signals are combined into the sound signal of the 5. 1 sound channel, which solves the problems in the related art that the audio data recorded by the user can only be single-channel data or dual-channel data and thereby sound field range and sense of immediacy of the recorded audio data are poor, and achieves the effects that the user may record 5.1 sound channel data without changing the hardware configuration of the terminal and thereby recording quality and listening experience of the user are greatly improved.

In the sound recording method provided by the present embodiment, the three microphones are placed according to predefined positions, thereby the three sound signals collected by the three microphones can be recorded as 5.1 sound channel data with a relatively small calculated amount, in this way, the following effect is achieved: the user can record 5.1 sound channel data without changing the hardware configuration of the terminal and with a relatively small calculated amount.

Fig. 4 is a flow chart of a method for recording sound, according to a further exemplary embodiment. As shown in Fig. 4, illustrations are given by using an example in which the sound recording method is applied in the second setting manner shown in Fig. 1D, and the method includes the following steps.

In step 310, three channels of sound signals collected by the three microphones are acquired.

The terminal acquires three channels of sound signals respectively collected by the three microphones. In the present embodiment, the sound signals collected by the first, second and third microphones are respectively denoted by A_mic1, A_mic2 and A_mic3.

The sound signals acquired by the terminal are analog signals. After acquiring the sound signals, the terminal may convert the analog signals into digital signals for subsequent processing, or the collected analog signals may be processed directly, which is not limited by the present embodiment. In the present embodiment, illustrations are given by using an example in which the collected sound signals are converted into digital signals.

In step 320, a noise-reduction processing is performed to the three channels of sound signals.

The terminal performs a noise-reduction processing to the acquired three channels of sound signals, and the sound signals of the first, second and third microphones after the noise-reduction are respectively denoted by A_mic1', A_mic2' and A_mic3'.

One noise-reduction method is as follows: removing noise from the signal based on wavelet, performing a multi-layer wavelet signal decomposition to the collected first sound signal A_mic1, selecting a proper threshold to process a high frequency coefficient in each layer of the wavelet signal, and performing a wavelet reconstruction on the processed signals, wherein the outputted signal is A_mic1'. This method may also be adopted for the second and third signals to reduce noise, and the sound signals obtained by the noise-reduction are A_mic2' and A_mic3'.

The person skilled in the art may appreciate that the noise-reduction process in this step is not necessary, and is only for improving quality of the sound signal, i.e., this step is optional. In addition, there are many methods for reducing noise, and the noise in the three channels of sound signals may be filtered via various signal processing methods, which is not limited by the present embodiment.

In step 338, for any sound channel in the 5.1 sound channel, two channels of sound signals collected by two microphones which are nearest to this sound channel are acquired.

The terminal acquires position information of the three microphones with respect to an origin point. The origin point mentioned herein indicates a position of a center point 10 of the 5.1 sound channel system, and the terminal establishes a coordinated system based on the origin point.

One method for establishing the coordinated system is as follows: the center point of the 5.1 sound channel system is used as the origin point, a direction of the center point towards the center sound channel is a positive direction of a y axis, and a direction perpendicular to the y axis and pointing to the right side is a positive direction of an x axis. In the present embodiment, illustrations are given by using this coordinated system in combination with Fig. 1A. The present embodiment does not limit the method for establishing the coordinated system.

The terminal denotes positions of the first, second and third microphones in this coordinated system by P_mic1(x1,y1), P_mic2(x2,y2), and P_mic3(x3,y3).

The sound channels in the 5.1 sound channel system have different directions, as shown in Fig. 1A, the direction of the center sound channel is a y axis direction, the direction of the left sound channel leans 30 degrees to the left of the positive direction of y axis, the direction of the right sound channel leans 30 degrees to the right of the positive direction of y axis, the direction of the rear left sound channel leans 100-120 degrees to the left of the positive direction of y axis, and the direction of the rear right sound channel leans 100-120 degrees to the right of the positive direction of y axis.

For any sound channel in the 5.1 sound channel, the terminal firstly acquires two channels of sound signals collected by two microphones nearest to this sound channel, then separates out the sound signal corresponding to this sound channel from the two channels of sound signals according to a phase difference of arrival corresponding to this sound channel.

**[0094]** In the present embodiment, the center sound channel is taken as an example for explanation. As shown in Fig. 1D, the two microphones nearest to the center sound channel are the first and second microphones, then two channels of sound signals collected by the two microphones and denoised are respectively A_mic1' and A_mic2'.

**[0095]** The terminal may separate out the sound signal corresponding to this sound channel from the two channels of sound signals according to the phase difference of arrival corresponding to the sound channel, which may include the following two substeps.

**[0096]** In step 339a, first filtering data is obtained by filtering a first channel of sound signal in the two channels of sound signals according to the phase difference of arrival corresponding to the sound channel, and second filtering data is obtained by filtering a second channel of sound signal in the two channels of sound signals according to the phase difference of arrival corresponding to the sound channel.

**[0097]** Since each microphone may receive sound signals from individual directions, and phase of arrival of the sound signals from respective directions arriving at the three microphones are different, the terminal may exact a sound signal from a certain sound channel according to a phase difference of arrival of each sound channel.

**[0098]** Taking the center sound channel as an example, the two microphones nearest to the center sound channel is the first and second microphones, then the first sound signal is the above first channel of sound signal, and the second sound signal is the above second channel of sound signal. Since distances between the center sound channel and the nearest first and second microphones are different, a fixed phase difference of arrival exists when the sound in the direction of the center sound channel arrives at the first and second microphones, and the phase difference of arrival is denoted by $\Delta$.

**[0099]** The sound signals of the first channel of sound signal and the second channel of sound signal are divided into a plurality of sub-signals in a same manner, and in general, for each sub-signal in the first channel of sound signal, there is a corresponding sub-signal at the same moment in the second channel of sound signal. Then, the terminal compares a phase difference of arrival between a pair of sub-signals belonging to the same moment in the first channel of sound signal and the second channel of sound signal, and when the phase difference of arrival is $\Delta$, the signal is deemed as the signal belonging to the direction of the center sound channel, and the signal is maintained; and when the phase difference of arrival is not $\Delta$, the signal is not deemed as the signal belonging to the direction of the center sound channel, and the signal is filtered. Through such method, the first channel of sound signal is filtered to obtain the first filtering data, and the second channel of sound signal is filtered to obtain the second filtering data.

**[0100]** When dividing the sound signal into a plurality of sub-signals, the terminal may use each audio frame as one sub-signal according to a coding protocol, and the manners of each sub-signal division are not limited by the present embodiment.

**[0101]** In addition, the phase difference of arrival corresponding to each sound channel is calculated by the terminal according to a coordinate position of each microphone in advance.

**[0102]** In step 339b, a same portion in the first filtering data and the second filtering data is exacted as the sound signal corresponding to the sound channel.

**[0103]** The terminal exacts the same portion in the first filtering data and the second filtering data as the sound signal corresponding to the sound channel.

**[0104]** The person skilled in the art may appreciate that the sound channel herein may be any one of the central channel signal, the left channel signal, the right channel signal, the rear left channel signal, the rear right channel signal, and the bass channel signal. Each sound channel may be processed by using a processing method similar to the processing method for the center sound channel in the above example. After acquiring the sound signal of each sound channel, the terminal denotes the exacted sound signals of these sound channels respectively by the central channel signal A_C', the left channel signal A_L', the right channel signal A_R', the rear left channel signal A_LS', and the rear right channel signal A_RS'.

**[0105]** In step 341, amplitudes of the three channels of sound signals at the same moment are averaged to obtain an average sound signal.

**[0106]** The terminal averages amplitudes of the denoised first sound signal A_mic1', second sound signal A_mic2' and third sound signal A_mic3' at the same moment to obtain an average sound signal, denoted by A_LFE, i.e., the average sound signal is A_LFE,

$$A_LFE=(A_mic1'+A_mic2'+A_mic3')/3$$

**[0107]** In step 342, a low-pass filtering is performed to the average sound signal to obtain the bass channel signal.

**[0108]** The terminal performs a low-pass filtering to the average sound signal obtained in the step 341 to obtain the bass channel signal.

**[0109]** The cut-off frequency of the low-pass filter is optional, and generally, the cut-off frequency is set to be a value between 80Hz to 120Hz, which is not limited by the present embodiment.

**[0110]** The bass channel signal obtained by the low-pass filtering is denoted by A_LFE', i.e., the bass channel signal is A_LFE', A_LFE'=LPASS(A_LFE),
wherein function y=LPASS(x) indicates that a signal y is a signal obtained by making a signal x passing through the low-pass filter.

**[0111]** It should be noted, the step 341 and the step 338 are coordinate, and there is no specific sequencing.

In step 350, the central channel signal, the left channel signal, the right channel signal, the rear left channel signal, the rear right channel signal, and the bass channel signal are combined to obtain a 5.1 channel signal.

The terminal combines the central channel signal A_C', the left channel signal A_L', the right channel signal A_R', the rear left channel signal A_LS', the rear right channel signal A_RS', and the bass channel signal A_LFE' obtained by the above steps to obtain the 5.1 sound channel signal, denoted by A_5.1ch. The optional combination manners may be appreciated by the person skilled in the art, and will not be elaborated in the present embodiment.

In step 360, the 5.1 sound channel signal obtained by combination is saved in a memory.

The terminal saves the 5.1 sound channel signal obtained by combination in a memory of the terminal per se, or in an exterior storage device.

When storing the 5.1 sound channel signal, the terminal may adopt formats such as an uncompressed PCM or WAV.

Alternatively, the terminal may also adopt a compression format supporting 5.1 sound channel, such as DolbyDigital, AAC, DTS, and 3D-Audio.

In conclusion, in the method provided in the present embodiment, three channels of sound signals are collected by three microphones in a terminal, the central channel signal, the left channel signal, the right channel signal, the rear left channel signal, the rear right channel signal, and the bass channel signal are established and calculated according to the three channels of sound signals, and the six channel signals are combined into the sound signal of the 5. 1 sound channel, which solves the problems in the related art that the audio data recorded by the user can only be single-channel data or dual-channel data and thereby sound field range and sense of immediacy of the recorded audio data are poor, and achieves the effects that the user may record 5.1 sound channel data and thereby recording quality and listening experience of the user are greatly improved without changing the hardware configuration of the terminal.

In the sound recording method provided by the present embodiment, the three microphones are placed according to predefined positions, thereby the three sound signals collected by the three microphones can be recorded as 5.1 sound channel data with a relatively small calculated amount, in this way, the following effect is achieved: the user can record 5.1 sound channel data without changing the hardware configuration of the terminal and with a relatively small calculated amount.

Embodiments of device in the present disclosure are described as follows, and they may be used for performing the method embodiments of the present disclosure. For details not disclosed in the device embodiments of the present disclosure, the method embodiments of the present disclosure may be referred to.

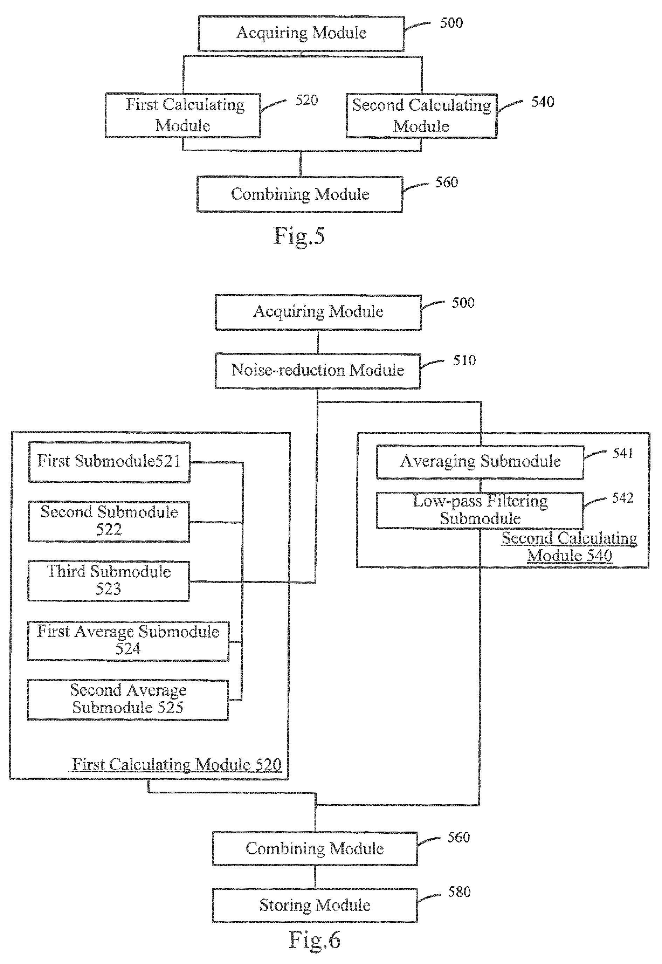

Fig. 5 is a block diagram of a method for recording sound, according to an exemplary embodiment. As shown in Fig. 5, the sound recording device is applied in an implementation environment shown in Fig. 1B and involves the 5.1 sound channel system shown in Fig. 1A. The device includes, but is not limited to, an acquiring module 500, a first calculating module 520, a second calculating module 540, and a combining module 560.

The acquiring module 500 is configured to acquire three channels of sound signals collected by the three microphones.

The first calculating module 520 is configured to calculate a central channel signal, a left channel signal, a right channel signal, a rear left channel signal and a rear right channel signal in a 5.1 sound channel according to the three channels of sound signals.

The second calculating module 540 is configured to calculate a bass channel signal in the 5.1 sound channel according to the three channels of sound signals.

The combining module 560 is configured to combine the central channel signal, the left channel signal, the right channel signal, the rear left channel signal, the rear right channel signal, and the bass channel signal to obtain a sound signal of the 5.1 sound channel.

In conclusion, in the sound recording device provided in the embodiment of the present disclosure, three channels of sound signals are collected by three microphones in a terminal, the central channel signal, the left channel signal, the right channel signal, the rear left channel signal, the rear right channel signal, and the bass channel signal are established and calculated according to the three channels of sound signals, and the six channel signals are combined into the sound signal of the 5. 1 sound channel, which solves the problems in the related art that the audio data recorded by the user can only be single-channel data or dual-channel data and thereby sound field range and sense of immediacy of the recorded audio data are poor, and achieves the effects that the user may record 5.1 sound channel data and thereby recording quality and listening experience of the user are greatly improved without changing the hardware configuration of the terminal.

Fig. 6 is a block diagram of a method for recording sound, according to another exemplary embodiment. As shown in Fig. 6, illustrations are given by using an example in which the sound recording device is applied in the first setting manner shown in Fig. 1B, and the device includes, but is not limited to, an acquiring module 500, a noise-reduction module 510, a first calculating module 520, a second calculating module 540, a combining module 560, and a storing module 580.

The acquiring module 500 is configured to acquire three channels of sound signals collected by the three microphones.

The noise-reduction module 510 is configured to perform a noise-reduction processing to the three channels of sound signals.

The first calculating module 520 is configured to calculate a central channel signal, a left channel signal, a right channel signal, a rear left channel signal and a rear right channel signal in a 5.1 sound channel according to the three channels of sound signals.

In particular, the first calculating module 520 includes a first submodule 521, a second submodule 522, a third submodule 523, a first average submodule 524, and a second average submodule 525.

The first submodule 521 is configured to use a first sound signal collected by the first microphone as the central channel signal.

The second submodule 522 is configured to use a second sound signal collected by the second microphone as the rear left channel signal.

The third submodule 523 is configured to use a third sound signal collected by the third microphone as the rear right channel signal.

The first average submodule 524 is configured to perform a weighted average to amplitudes of the first sound signal and the second sound signal at the same moment to obtain a fourth sound signal and use the fourth sound signal as the left channel signal.

The second average submodule 525 is configured to perform a weighted average on amplitudes of the first sound signal and the third sound signal at the same moment to obtain a fifth sound signal and use the fifth sound signal as the right channel signal.

The second calculating module 540 is configured to calculate a bass channel signal in the 5.1 sound channel according to the three channels of sound signals. The second calculating module 540 includes: an averaging submodule 541, and a low-pass filtering submodule 542.

The averaging submodule 541 is configured to average amplitudes of the three channels of sound signals at the same moment to obtain an average sound signal.

The low-pass filtering submodule 542 is configured to perform a low-pass filtering to the average sound signal to obtain the bass channel signal.

The combining module 560 is configured to combine the central channel signal, the left channel signal, the right channel signal, the rear left channel signal, the rear right channel signal, and the bass channel signal to obtain a sound signal of the 5.1 sound channel.

The storing module 580 is configured to save the 5.1 sound channel signal obtained by combination into a memory.

In conclusion, in the method provided in the present embodiment, three channels of sound signals are collected by three microphones in a terminal, the central channel signal, the left channel signal, the right channel signal, the rear left channel signal, the rear right channel signal, and the bass channel signal are established and calculated according to the three channels of sound signals, and the six channel signals are combined into the sound signal of the 5.1 sound channel, which solves the problems in the related art that the audio data recorded by the user can only be single-channel data or dual-channel data and thereby sound field range and sense of immediacy of the recorded audio data are poor, and achieves the effects that the user may record 5.1 sound channel data and thereby recording quality and listening experience of the user are greatly improved without changing the hardware configuration of the terminal.

With respect to the devices in the above embodiments, the specific manners for performing operations for individual modules therein have been described in detail in the embodiments regarding the methods, which will not be elaborated herein.

One exemplary embodiment of the present disclosure provides a sound recording device for a mobile terminal provided with three microphones and being capable of realizing the sound recording method provided by the present disclosure. The device includes: a processor; and a memory for storing instructions executable by the processor;

wherein the processor is configured to:

acquire three channels of sound signals collected by the three microphones;
calculate a central channel signal, a left channel signal, a right channel signal, a rear left channel signal and a rear right channel signal in a 5.1 sound channel according to the three channels of sound signals;
calculate a bass channel signal in the 5.1 sound channel according to the three channels of sound signals; and
combine the central channel signal, the left channel signal, the right channel signal, the rear left channel signal, the rear right channel signal, and the bass channel signal to obtain a sound signal of the 5.1 sound channel.

When the above three microphones includes a first microphone located in a central channel direction of the 5.1 sound channel, a second microphone located in a rear left channel direction of the 5.1 sound channel, and a third microphone located in a rear right channel direction of the 5.1 sound channel, the processor may be configured to:

use a first sound signal collected by the first microphone as the central channel signal;
use a second sound signal collected by the second microphone as the rear left channel signal;
use a third sound signal collected by the third microphone as the rear right channel signal;
perform a weighted average on amplitudes of the first sound signal and the second sound signal at the same moment to obtain a fourth sound signal and use the fourth sound signal as the left channel signal; and
perform a weighted average on amplitudes of the first sound signal and the third sound signal at the same moment to obtain a fifth sound signal and use the fifth sound signal as the right channel signal.

When the three microphones are dispersedly disposed with respect to an origin point, the processor may be configured to:

for any sound channel in the 5.1 sound channel, acquire two channels of sound signals collected by the two nearest microphones; and

separate out a sound signal corresponding to the sound channel from the two channels of sound signals according to a phase difference of arrival corresponding to the sound channel,

filter a first channel of sound signal in the two channels of sound signals according to the phase difference of arrival corresponding to the sound channel to obtain first filtering data, filter a second channel of sound signal in the two channels of sound signals according to the phase difference of arrival corresponding to the sound channel to obtain second filtering data; and

exact a same portion in the first filtering data and the second filtering data as the sound signal corresponding to the sound channel,

wherein the phase difference of arrival is a difference between initial phase angles of sound from the sound channel when arriving at the two microphones respectively, and the sound signal corresponding to the sound channel is any one of the central channel signal, the left channel signal, the right channel signal, the rear left channel signal and the rear right channel signal.

Advantageously, the processor is configured to:

average amplitudes of the three channels of sound signals at the same moment to obtain an average sound signal; and

perform a low-pass filtering on the average sound signal to obtain the bass channel signal.

Advantageously, the processor is configured to:

perform a noise-reduction processing on the three channels of sound signals.

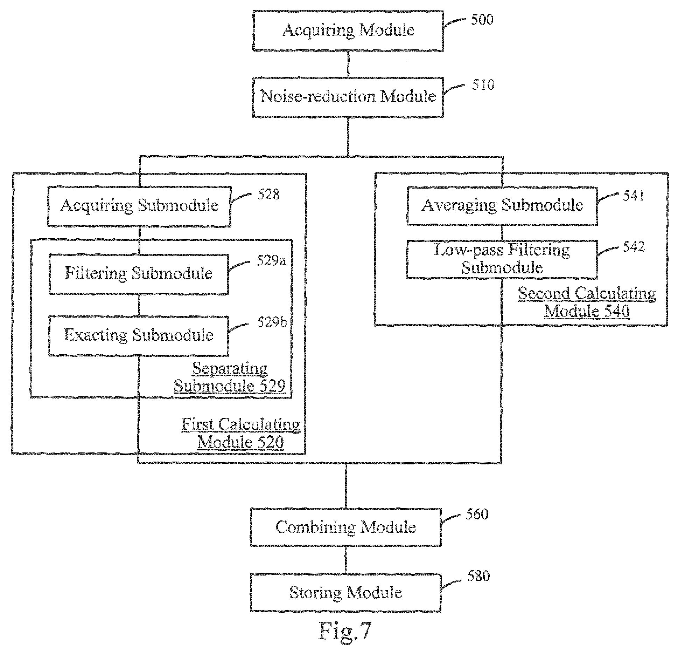

Fig. 7 is a block diagram of a method for recording sound, according to further another exemplary embodiment. As shown in Fig. 7, illustrations are given by using an example in which the sound recording device is applied in the second setting manner shown in Fig. 1D, and the device includes, but is not limited to, an acquiring module 500, a noise-reduction module 510, a first calculating module 520, a second calculating module 540, a combining module 560, and a storing module 580.

The acquiring module 500 is configured to acquire three channels of sound signals collected by the three microphones.

The noise-reduction module 510 is configured to perform a noise-reduction processing to the three channels of sound signals.

The first calculating module 520 is configured to calculate a central channel signal, a left channel signal, a right channel signal, a rear left channel signal and a rear right channel signal in a 5.1 sound channel according to the three channels of sound signals.

In particular, the first calculating module 520 includes: an acquiring submodule 528, and a separating submodule 529.

The acquiring submodule 528 is configured to, for any sound channel in the 5.1 sound channel, acquire two channels of sound signals collected by the two nearest microphones.

The separating submodule 529 is configured to separate out a sound signal corresponding to the sound channel from the two channels of sound signals according to a phase difference of arrival corresponding to the sound channel.

Further, the above separating submodule 529 submodule includes: a first separating submodule 529a and a filtering submodule 529b.

The first separating submodule 529a is configured to filter first sound data according to the phase difference of arrival corresponding to the sound channel to obtain first filtering data; and filter second sound data according to the phase difference of arrival corresponding to the sound channel to obtain second filtering data.

The exacting submodule 529b is configured to exact a same portion in the first filtering data and the second filtering data as the sound signal corresponding to the sound channel.

The second calculating module 540 is configured to calculate a bass channel signal in the 5.1 sound channel according to the three channels of sound signals. The second calculating module 540 includes: an averaging submodule 541 and a low-pass filtering submodule 542.

The averaging submodule 541 is configured to average amplitudes of the three channels of sound signals at the same moment to obtain an average sound signal.

The low-pass filtering submodule 542 is configured to perform a low-pass filtering on the average sound signal to obtain the bass channel signal.

The combining module 560 is configured to combine the central channel signal, the left channel signal, the right channel signal, the rear left channel signal, the rear right channel signal, and the bass channel signal to obtain a sound signal of the 5.1 sound channel.

The storing module 580 is configured to save the 5.1 sound channel signal obtained by combination into a memory.

In conclusion, in the sound recording device provided in the embodiment of the present disclosure, three channels of sound signals are collected by three microphones in a terminal, the central channel signal, the left channel signal, the right channel signal, the rear left channel signal, the rear right channel signal, and the bass channel signal are established and calculated according to the three channels of sound signals, and the six channel signals are combined into the sound signal of the 5. 1 sound channel, which solves the problems in the related art that the audio data recorded by the user can only be single-channel data or dual-channel data and thereby sound field range and sense of immediacy of the recorded audio data are poor, and achieves the effects that the user may record 5.1 sound channel data and thereby recording quality and listening experience of the user are greatly improved without changing the hardware configuration of the terminal.

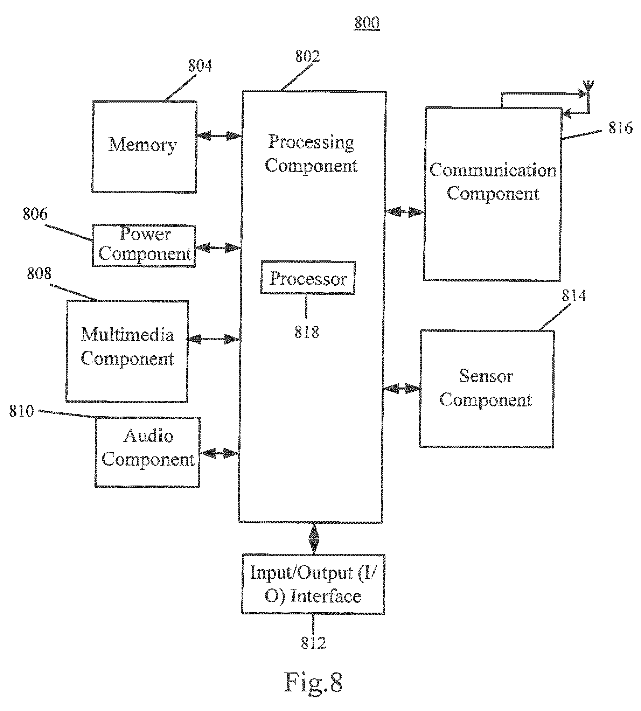

Fig. 8 is a block diagram of a device, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 818 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 818 in the device 800, for performing the above-described sound recording methods. For example, the non-transitory computer-readable storage medium may be a ROM, a RAM, a CD-ROM, a magnetic tape, a floppy disc, an optical data storage device, and the like.

## Claims

1. A sound recording method applied in a mobile terminal provided with three microphones, comprising:

   acquiring (202, 310) three channels of sound signals collected by the three microphones;
   calculating (204) a central channel signal, a left channel signal, a right channel signal, a rear left channel signal and a rear right channel signal in a 5.1 sound channel according to the three channels of sound signals;
   calculating (206) a bass channel signal in the 5.1 sound channel according to the three channels of sound signals; and
   combining (208, 350) the central channel signal, the left channel signal, the right channel signal, the rear left channel signal, the rear right channel signal, and the bass channel signal to obtain a sound signal of the 5.1 sound channel.

2. The method of claim 1, wherein the three microphones comprise a first microphone located in a central channel direction of the 5.1 sound channel, a second microphone located in a rear left channel direction of the 5.1 sound channel, and a third microphone located in a rear right channel direction of the 5.1 sound channel; and

calculating (204) the central channel signal, the left channel signal, the right channel signal, the rear left channel signal and the rear right channel signal in the 5.1 sound channel according to the three channels of sound signals comprises:

   using (331) a first sound signal collected by the first microphone as the central channel signal;
   using (332) a second sound signal collected by the second microphone as the rear left channel signal;
   using (333) a third sound signal collected by the third microphone as the rear right channel signal;
   performing a weighted average on amplitudes of the first sound signal and the second sound signal at the same moment to obtain a fourth sound signal and using the fourth sound signal as the left channel signal (334); and
   performing a weighted average on amplitudes of the first sound signal and the third sound signal at the same moment to obtain a fifth sound signal and using the fifth sound signal as the right channel signal (335).

3. The method of claim 1, wherein the three microphones are dispersedly disposed with respect to an origin point, and each sound channel in the 5.1 sound channel has two nearest microphones among the three microphones; and
calculating (204) the central channel signal, the left channel signal, the right channel signal, the rear left channel signal and the rear right channel signal in the 5.1 sound channel according to the three channels of sound signals comprises:

   for any sound channel in the 5.1 sound channel, acquiring (338) two channels of sound signals collected by two microphones nearest to this sound channel; and
   separating out a sound signal corresponding to this sound channel from the two channels of sound signals according to a phase difference of arrival corresponding to this sound channel,

wherein the phase difference of arrival is a difference between initial phase angles of sound from this sound channel when arriving at the two microphones respectively, and the sound signal corresponding to the sound channel is any one of the central channel signal, the left channel signal, the right channel signal, the rear left channel signal and the rear right channel signal.

4. The method of claim 3, wherein the separating out the sound signal corresponding to this sound channel from the two channels of sound signals according to the phase difference of arrival corresponding to this sound channel comprises:

> filtering a first channel of sound signal in the two channels of sound signals according to the phase difference of arrival corresponding to the sound channel to obtain first filtering data, filtering a second channel of sound signal in the two channels of sound signals according to the phase difference of arrival corresponding to the sound channel to obtain second filtering data (339a); and
>
> exacting (339b) a same portion in the first filtering data and the second filtering data as the sound signal corresponding to the sound channel.

5. The method of any of claims 2-4, wherein calculating (206) the bass channel signal in the 5.1 sound channel according to the three channels of sound signals comprises:

> averaging (341) amplitudes of the three channels of sound signals at the same moment to obtain an average sound signal; and
>
> performing (342) a low-pass filtering on the average sound signal to obtain the bass channel signal.

6. The method of any of claims 1-5, further comprising:

> performing (320) a noise-reduction processing to the three channels of sound signals.

7. A sound recording device provided with three microphones, comprising:

> an acquiring module (500) configured to acquire three channels of sound signals collected by the three microphones;
>
> a first calculating module (520) configured to calculate a central channel signal, a left channel signal, a right channel signal, a rear left channel signal and a rear right channel signal in a 5.1 sound channel according to the three channels of sound signals;
>
> a second calculating module (540) configured to calculate a bass channel signal in the 5.1 sound channel according to the three channels of sound signals; and
>
> a combining module (560) configured to combine the central channel signal, the left channel signal, the right channel signal, the rear left channel signal, the rear right channel signal, and the bass channel signal to obtain a sound signal of the 5.1 sound channel.

8. The device of claim 7, wherein the three microphones comprise a first microphone located in a central channel direction of the 5.1 sound channel, a second microphone located in a rear left channel direction of the 5.1 sound channel, and a third microphone located in a rear right channel direction of the 5.1 sound channel; and
the first calculating module (520) comprises:

> a first submodule (521) configured to use a first sound signal collected by the first microphone as the central channel signal;
>
> a second submodule (522) configured to use a second sound signal collected by the second microphone as the rear left channel signal;
>
> a third submodule (523) configured to use a third sound signal collected by the third microphone as the rear right channel signal;
>
> a first average submodule (524) configured to perform a weighted average on amplitudes of the first sound signal and the second sound signal at the same moment to obtain a fourth sound signal and use the fourth sound signal as the left channel signal; and
>
> a second average submodule (525) configured to perform a weighted average on amplitudes of the first sound signal and the third sound signal at the same moment to obtain a fifth sound signal and use the fifth sound signal as the right channel signal.

9. The device of claim 7, wherein the three microphones are dispersedly disposed with respect to an origin point, and each sound channel in the 5.1 sound channel has two nearest microphones among the three microphones; and
the first calculating module (520) comprises:

> an acquiring submodule (528) configured to, for any sound channel in the 5.1 sound channel, acquire two channels of sound signals collected by two microphones nearest to this sound channel; and
>
> a separating submodule (529) configured to separate out a sound signal corresponding to this sound channel from the two channels of sound signals according to a phase difference of arrival corresponding to this sound channel,

wherein the phase difference of arrival is a difference between initial phase angles of sound from this sound channel when arriving at the two microphones respectively, and the sound signal corresponding to the sound channel is any one of the central channel signal, the left channel signal, the right channel signal, the rear left channel signal and the rear right channel signal.

10. The device of claim 9, wherein the separating submodule (529) comprises:

a filtering submodule (529a) configured to filter a first channel of sound signal in the two channels of sound signals according to the phase difference of arrival corresponding to the sound channel to obtain first filtering data, and filter a second channel of sound signal in the two channels of sound signals according to the phase difference of arrival corresponding to the sound channel to obtain second filtering data; and
an exacting submodule (529b) configured to exact a same portion in the first filtering data and the second filtering data as the sound signal corresponding to the sound channel.

11. The device of any of claims 7-10, wherein the second calculating module (540) comprises:

an averaging submodule (541) configured to average amplitudes of the three channels of sound signals at the same moment to obtain an average sound signal; and
a low-pass filtering submodule (542) configured to perform a low-pass filtering on the average sound signal to obtain the bass channel signal.

12. The device of any of claims 7-11, further comprising:

a noise-reduction module (510) configured to perform a noise-reduction processing to the three channels of sound signals.

13. A sound recording device provided with three microphones, comprising:

a processor (818); and
a memory (804) for storing instructions executable by the processor (818);

wherein the processor (818) is configured to perform a method according to any of claims 1-6.

14. A computer program, which when executed on a processor of a mobile terminal, performs a method according to any one of claims 1 to 6.

15. A computer readable storage medium, comprising a computer program according to claim 14.

Fig.1A

Fig.1B

Fig.1C

Fig.1D

Acquire three channels of sound signals collected by three microphones — 202

Calculate a central channel signal, a left channel signal, a right channel signal, a rear left channel signal and a rear right channel signal in a 5.1 sound channel according to the three channels of sound signals — 204

Calculate a bass channel signal in the 5.1 sound channel according to the three channels of sound signals — 206

Combine the central channel signal, the left channel signal, the right channel signal, the rear left channel signal, the rear right channel signal, and the bass channel signal to obtain a 5.1 sound channel signal — 208

Fig.2

Acquire three channels of sound signals collected by three microphones ⎯ 310

Perform a noise-reduction processing to the three channels of sound signals ⎯ 320

Use a first sound signal collected by the first microphone as the central channel signal ⎯ 331

Use a second sound signal collected by the second microphone as the rear left channel signal ⎯ 332

Use a third sound signal collected by the third microphone as the rear right channel signal ⎯ 333

Perform a weighted average on amplitudes of the first sound signal and the second sound signal at the same moment to obtain a fourth sound signal, and use the fourth sound signal is as the left channel signal ⎯ 334

Perform a weighted average on amplitudes of the first sound signal and the third sound signal at the same moment to obtain a fifth sound signal, and the fifth sound signal used as the right channel signal ⎯ 335

Average amplitudes of the three channels of sound signals at the same moment to obtain an average sound signal ⎯ 341

Perform a low-pass filtering on the average sound signal to obtain the bass channel signal ⎯ 342

Combine the central channel signal, the left channel signal, the right channel signal, the rear left channel signal, the rear right channel signal, and the bass channel signal to obtain a 5.1 sound channel signal ⎯ 350

Save the 5.1 sound channel signal obtained by combination in a memory ⎯ 360

Fig.3

Acquire three channels of sound signals collected by three microphones — 310

Perform a noise-reduction processing to the three channels of sound signals — 320

For any sound channel in the 5.1 sound channel, acquire two channels of sound signals collected by two microphones which are nearest to this sound channel — 338

Average amplitudes of the three channels of sound signals at the same moment to obtain an average sound signal — 341

Filter first sound data according to the phase difference corresponding to the sound channel to obtain first filtering data, and filter second sound data according to the phase difference corresponding to the sound channel to obtain second filtering data — 339a

Perform a low-pass filtering on the average sound signal to obtain the bass channel signal — 342

Exact a same portion in the first filtering data and the second filtering data as the sound signal corresponding to the sound channel — 339b

Combine the central channel signal, the left channel signal, the right channel signal, the rear left channel signal, the rear right channel signal, and the bass channel signal to obtain a 5.1 sound channel signal — 350

Save the 5.1 sound channel signal obtained by combination in a memory — 360

Fig.4

Fig.5

Fig.6

Acquiring Module — 500

Noise-reduction Module — 510

Acquiring Submodule — 528

Filtering Submodule — 529a

Exacting Submodule — 529b

Separating
Submodule 529

First Calculating
Module 520

Averaging Submodule — 541

Low-pass Filtering
Submodule — 542

Second Calculating
Module 540

Combining Module — 560

Storing Module — 580

Fig.7

<u>800</u>

804

802

Memory

Processing
Component

Communication
Component

816

806

Power
Component

808

Multimedia
Component

Processor

818

810

Audio
Component

Sensor
Component

814

Input/Output (I/
O) Interface

812

Fig.8

Europäisches
Patentamt

European
Patent Office

Office européen
des brevets

## EUROPEAN SEARCH REPORT

Application Number

EP 16 17 5978

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2015/125011 A1 (SEKIYA TOSHIYUKI [JP])<br>7 May 2015 (2015-05-07)<br>* paragraphs [0146], [0153] *<br>* paragraph [0156] - paragraph [0174] *<br>* paragraph [0189] - paragraph [0195] *<br>* paragraph [0201] - paragraph [0205] *<br>* paragraph [0213] - paragraph [0221] *<br>* paragraph [0230] - paragraph [0236] *<br>* paragraph [0250] - paragraph [0253] *<br>* paragraph [0393] - paragraph [0397] *<br>* paragraph [0453] - paragraph [0457] *<br>* paragraph [0465] - paragraph [0466] *<br>* figures 16, 21-25, 57-59 * | 1,2,5-8,<br>11-15<br>3,4,9,10 | INV.<br>H04R3/00<br><br>ADD.<br>H04R1/32 |
| Y | WO 2012/061149 A1 (QUALCOMM INC [US]; KIM LAE-HOON [US]; VISSER ERIK [US]; XIANG PEI [US]) 10 May 2012 (2012-05-10)<br>* paragraph [0045] - paragraph [0062] *<br>* paragraph [0067] - paragraph [0069] *<br>* paragraph [0073] - paragraph [0079] *<br>* figures 16, 23C, 25 * | 3,4,9,10 | |
| A | US 2005/237395 A1 (TAKENAKA KOICHI [JP] ET AL) 27 October 2005 (2005-10-27)<br>* paragraphs [0080], [0087] *<br>* figure 7 * | 5,11 | TECHNICAL FIELDS SEARCHED (IPC)<br><br>H04R<br>H04S |
| A | WO 2012/009107 A1 (MOTOROLA MOBILITY INC [US]; ZUREK ROBERT [US]; BASTYR KEVIN [US]; CLAR) 19 January 2012 (2012-01-19)<br>* paragraph [0050] *<br>* paragraph [0075] - paragraph [0077] *<br>* paragraph [0088] - paragraph [0092] *<br>* figure 9 *<br><br>-----<br><br>-/-- | 1-15 | |

The present search report has been drawn up for all claims

| Place of search | Date of completion of the search | Examiner |
|---|---|---|
| The Hague | 14 March 2017 | Valenzuela, Miriam |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

**Application Number**

EP 16 17 5978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/275619 A1 (DAISHIN TAKUYA [JP] ET AL) 1 November 2012 (2012-11-01)<br>* paragraph [0011] - paragraph [0020] *<br>* paragraph [0056] - paragraph [0066] *<br>* paragraph [0079] - paragraph [0084] *<br>* figures 3,4, 12-16 *<br>----- | 1-15 | |

TECHNICAL FIELDS
SEARCHED      (IPC)

The present search report has been drawn up for all claims

| Place of search | Date of completion of the search | Examiner |
|---|---|---|
| The Hague | 14 March 2017 | Valenzuela, Miriam |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                      

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 17 5978

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2017

| Patent document cited in search report | | Publication date | Patent family member(s) | | Publication date |
|---|---|---|---|---|---|
| US 2015125011 | A1 | 07-05-2015 | JP | 2014017645 A | 30-01-2014 |
| | | | US | 2015125011 A1 | 07-05-2015 |
| | | | WO | 2014010280 A1 | 16-01-2014 |
| WO 2012061149 | A1 | 10-05-2012 | CN | 103181192 A | 26-06-2013 |
| | | | EP | 2633697 A1 | 04-09-2013 |
| | | | JP | 5762550 B2 | 12-08-2015 |
| | | | JP | 2014501064 A | 16-01-2014 |
| | | | JP | 2015213328 A | 26-11-2015 |
| | | | KR | 20130116271 A | 23-10-2013 |
| | | | US | 2012128160 A1 | 24-05-2012 |
| | | | WO | 2012061149 A1 | 10-05-2012 |
| US 2005237395 | A1 | 27-10-2005 | CN | 1691765 A | 02-11-2005 |
| | | | EP | 1589754 A2 | 26-10-2005 |
| | | | JP | 2005311604 A | 04-11-2005 |
| | | | KR | 20060047204 A | 18-05-2006 |
| | | | US | 2005237395 A1 | 27-10-2005 |
| WO 2012009107 | A1 | 19-01-2012 | CN | 103004233 A | 27-03-2013 |
| | | | EP | 2594087 A1 | 22-05-2013 |
| | | | US | 2012013768 A1 | 19-01-2012 |
| | | | WO | 2012009107 A1 | 19-01-2012 |
| US 2012275619 | A1 | 01-11-2012 | CN | 101222789 A | 16-07-2008 |
| | | | EP | 1940196 A1 | 02-07-2008 |
| | | | JP | 4367484 B2 | 18-11-2009 |
| | | | JP | 2008160588 A | 10-07-2008 |
| | | | US | 2008152154 A1 | 26-06-2008 |
| | | | US | 2012275619 A1 | 01-11-2012 |

EPO FORM P0459

For more details about this annex : see Official Journal of the European Patent Office, No. 12/82